# EUROPÄISCHE PATENTSCHRIFT

(11) **EP 0 378 101 B1**
(45) Veröffentlichungstag und Bekanntmachung des Hinweises auf die Patenterteilung: **29.06.1994**
(21) Anmeldenummer: 90100120.6
(22) Anmeldetag: 04.01.1990
(51) Int. Cl.: A46B 13/02, A46B 17/08

(54) **Elektrische Zahnbürste**
Electrical toothbrush
Brosse à dents électrique

(30) Priorität: 11.01.1989 DE 8900234 U
(43) Veröffentlichungstag der Anmeldung: 18.07.1990
(73) Patentinhaber: BAUSCH & LOMB INCORPORATED, Rochester New York 14601-0054 (US)
(72) Erfinder: Scherer, Benjamin, Ing. HTL, CH-8047 Zürich (CH)
(74) Vertreter: Schlagwein, Udo, Dipl.-Ing.

(56) Entgegenhaltungen:
- EP-A- 0 254 397
- EP-A- 0 357 863
- DE-U- 8 900 234

## Beschreibung

Die Erfindung bezieht sich auf eine elektrische Zahnbürste mit einem von Hand zu führenden Griffteil und einem Bürstenkörper, welcher einen Bürstenkopf mit mehreren, separat rotierenden Borstenträgern hat, welche im Bürstenkopf mit einem diese antreibenden Getriebe verbunden sind und bei der ein die Borstenträger aufweisendes Bauteil für den Benutzer leicht auswechselbar mit der Zahnbürste verbunden ist. Eine solche Zahnbürste ist Gegenstand der EP-0 254 397.

Da elektrische Zahnbürsten dieser Art meist von mehreren Personen benutzt werden und weil die Borsten einem Verschleiß unterliegen, ist es erforderlich, daß diese auf einem vom Benutzer leicht auswechselbaren Bauteil angeordnet sind. Gemäß der genannten EP-0 254 397 ist der Bürstenkörper als Ganzes lösbar am Griffteil befestigt. Bei herkömmlichen elektrischen Zahnbürsten, bei denen der Bürstenkörper lediglich eine pendelnde und/oder eine hin- und hergehende Bewegung ausführen muß, ist der Bürstenkörper ein relativ einfaches Bauteil, so daß sein Austausch wenig Kosten verursacht. Bei der Zahnbürste nach der EP-0 254 397 sind jedoch im Bürstenkopf des Bürstenkörpers insgesamt zehn die Borstenträger antreibende Zahnräder angeordnet, welche von einer im Bürstenkörper axial verschiebbaren Zahnstange angetrieben sind. Die Zahnstange ist mit einer Kupplung versehen, welche beim Aufsetzen des Borstenträgers auf das Griffteil mit einer in ihm vorgesehenen Schubstange kuppelt. Wegen dieser im Bürstenkörper erforderlichen, ein Getriebe bildenden Bauteile ist der Bürstenkörper insgesamt relativ teuer, so daß sein Austausch zu beträchtlichen Kosten führt.

Der Erfindung liegt die Aufgabe zugrunde, eine elektrische Zahnbürste der eingangs genannten Art so auszubilden, daß der Austausch seines die Borstenträger aufweisenden Bauteiles möglichst geringe Kosten verursacht.

Diese Aufgabe wird erfindungsgemäß dadurch gelöst, daß das Bauteil ein die Borstenträger lagernder, in den Bürstenkopf einsetzbarer Einsatz ist und daß die Borstenträger jeweils ein mit dem Getriebe durch eine Steckverbindung verbindbares Kuppelteil aufweisen.

Durch diese erfindungsgemäße Gestaltung sind die Borstenträger mit den Borsten an einem sehr einfachen und deshalb kostengünstig herstellbaren Bauteil vorgesehen, welches lediglich die Borstenträger drehbar lagern muß, jedoch kein Getriebe aufzuweisen hat. Deshalb ist die Anschaffung mehrerer solcher Bauteile für die Benutzung der Zahnbürste durch verschiedene Personen oder auch eine Erneuerung der Borsten mit geringem Kostenaufwand möglich.

Konstruktiv besonders einfach ist die Zahnbürste gestaltet, wenn der Bürstenkopf zur Halterung des Einsatzes eine einseitig offene Aufnahme hat und wenn zur Befestigung des Einsatzes eine von Hand zu lösende Rastverbindung vorgesehen ist.

Bei der eingangs genannten Zahnbürste nach der EP 0 254 397, bei der das Getriebe eine Zahnstange und mehrere Zahnräder aufweist, könnte man die Neuerung dadurch verwirklichen, daß die einzelnen Borstenträger jeweils mit einem koaxialen Zapfen in eine Aufnahme des jeweils zugehörigen Zahnrades greifen. Die Zahnbürste ist jedoch insgesamt einfacher ausgebildet, wenn das Getriebe eine im Bereich des Bürstenkopfes Quernuten aufweisende Schubstange hat und wenn das Kuppelteil jeweils durch einen am Borstenträger angebrachten, nach dem Einschieben des Einsatzes in eine Quernut eingreifenden Exzenter gebildet ist.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: einen Längsschnitt durch einen vorderen Bereich eines Bürstenkörpers einer Zahnbürste nach der Erfindung,
- Fig. 2: eine Draufsicht auf den Bürstenkörper,
- Fig. 3: eine perspektivische Ansicht eines Einsatzes des Bürstenkörpers,
- Fig. 4: eine perspektivische Ansicht eines vorderen Bereiches einer Schubstange des Bürstenkörpers,
- Fig. 5: eine perspektivische Ansicht des Bürstenkörpers ohne Einbauteile.

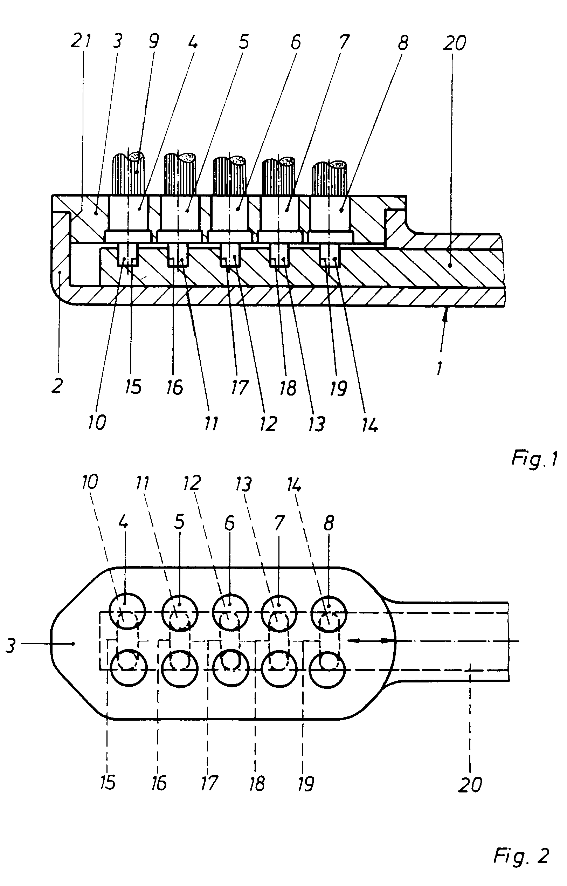

Die Figur 1 zeigt einen Bürstenkörper 1, welcher an seinem vorderen Ende einen Bürstenkopf 2 bildet. In diesem Bürstenkopf 2 ist von oben her auswechselbar ein Einsatz 3 eingesetzt, in dem drehbar gelagert mehrere Borstenträger 4 - 8 mit Borstenbüscheln 9 angeordnet sind. Jeder Borstenträger 4 - 8 hat einen in Figur 1 nach unten aus dem Einsatz 3 ragenden Exzenter 10 - 14, der jeweils in eine Quernut 15 - 19 einer Schubstange 20 greift, die axial verschieblich im Bürstenkörper 1 angeordnet ist. Wichtig für die Neuerung ist, daß der Einsatz 3 leicht lösbar in eine Aufnahme 21 des Bürstenkopfes 2 einsetzbar ist. Wird der Einsatz 3 aus der Aufnahme 21 herausgezogen, so rutschen die Exzenter 10 - 14 aus den nach oben hin offenen Quernuten 15 - 19 heraus.

In Figur 2 sind die Quernuten 15 - 19 gestrichelt dargestellt. Ebenso erkennt man die in sie eingreifenden Exzenter 10 - 14, sowie weitere Exzenter einer weiteren Reihe von Borstenträgern. Führt die Schubstange 20 eine hin- und hergehende Bewegung aus, dann kommt es durch den Eingriff der Exzenter 10 - 14 und der weiteren Exzenter in die Quernuten 15 - 19 zu einer Drehbewegung aller Borstenträger 4 - 8 und der weiteren, nicht positionierten Borstenträger.

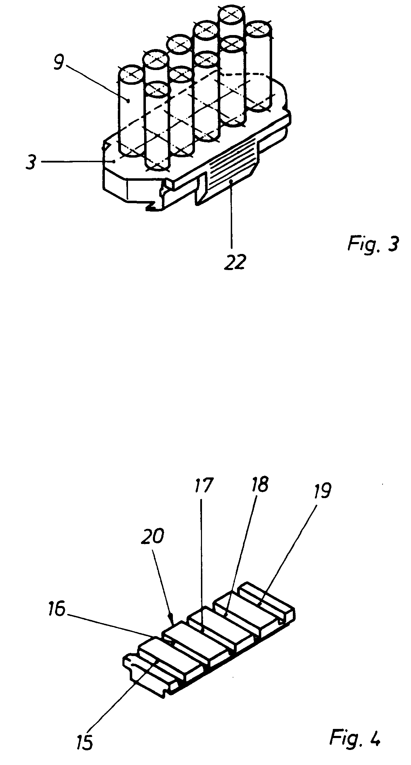

Die Figur 3 zeigt am die Borstenbüschel 9 aufweisenden Einsatz 3 eine seitliche Raste 22, mit der er in der Aufnahme 21 verrastbar ist.

Die Figur 4 läßt perspektivisch den vorderen Teil der Schubstange 20 erkennen, welcher die Quernuten 15 bis 19 aufweist, in die die in den Figuren 1 und 2 gezeigten Exzenter 10 - 14 der Borstenträger 4 - 8 eingreifen, wenn der Einsatz 3 in die Aufnahme 21 gesetzt ist.

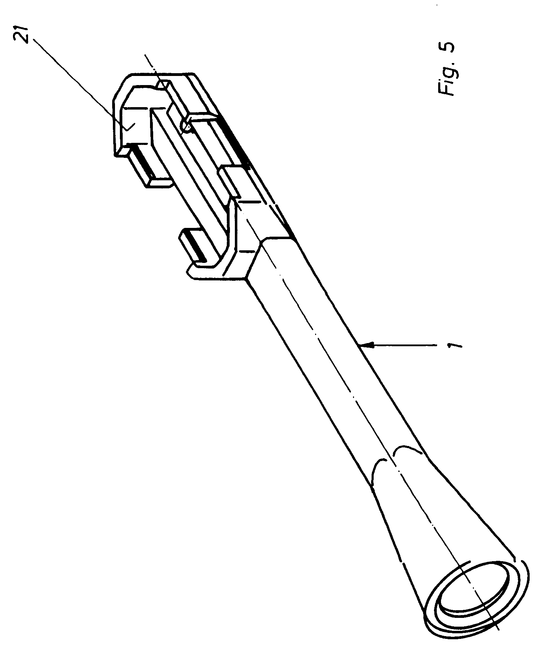

Die Figur 5 zeigt den Bürstenkörper 1 als Ganzes. Er kann unlösbar mit dem nicht gezeigten Griffteil der Zahnbürste verbunden werden, weil in ihm der Einsatz 3 mit den Borstenbüscheln 9 austauschbar ist.

### Auflistung der verwendeten Bezugszeichen

- 1: Bürstenkörper
- 2: Bürstenkopf
- 3: Einsatz
- 4 - 8: Borstenträger
- 9: Borstenbüschel
- 10 - 14: Exzenter
- 15 - 19: Quernut
- 20: Schubstange
- 21: Aufnahme
- 22: Raste

## Patentansprüche

1. Elektrische Zahnbürste mit einem von Hand zu führenden Griffteil und einem Bürstenkörper (1), welcher einen Bürstenkopf (2) mit mehreren, separat rotierenden Borstenträgern (4 - 8) hat, welche im Bürstenkopf (2) mit einem diese antreibenden Getriebe verbunden sind und bei der ein die Borstenträger (4 - 8) aufweisendes Bauteil für den Benutzer leicht auswechselbar mit der Zahnbürste verbunden ist, dadurch gekennzeichnet, daß das Bauteil ein die Borstenträger (4 - 8) lagernder, in den Bürstenkopf (2) einsetzbarer Einsatz (3) ist und daß die Borstenträger (4 - 8) jeweils ein mit dem Getriebe (Schubstange 20) durch eine Steckverbindung verbindbares Kuppelteil (Exzenter 10 - 14) aufweisen.

2. Elektrische Zahnbürste nach Anspruch 1, dadurch gekennzeichnet, daß der Bürstenkopf (2) zur Halterung des Einsatzes (3) eine einseitig offene Aufnahme (21) hat und daß zur Befestigung des Einsatzes (3) eine von Hand zu lösende Rastverbindung (Raste 22) vorgesehen ist.

3. Elektrische Zahnbürste nach den Ansprüchen 1 oder 2, dadurch gekennzeichnet, daß das Getriebe eine im Bereich des Bürstenkopfes (2) Quernuten (15 - 19) aufweisende Schubstange (20) hat und daß das Kuppelteil jeweils durch einen am Borstenträger (4 - 8) angebrachten, nach dem Einschieben des Einsatzes (3) in eine Quernut (15 - 19) eingreifenden Exzenter (10- 14) gebildet ist.

## Claims

1. An electric toothbrush having a manually-guided handle section and a brush body (1) which bears a brush head (2) with a plurality of separately rotating bristle holders (4 - 8) which are connected in the brush head (2) to a linkage which drives them and in which a component bearing the bristle holders (4 - 8) is joined to the toothbrush so as to be readily replaceable for the user, characterised in that the component is an insert (3) which supports the bristle holders (4 - 8) and which can be inserted into the brush head (2) and that the bristle holders (4 - 8) each have a coupling element (eccentric 10 - 14) which can be connected to the linkage (connecting-rod 20) by means of a plug-in connection.

2. An electric toothbrush according to Claim 1, characterised in that the brush head (2) has a receptacle (21) open on one side for holding the insert (3) and that a manually releasable snap-in connection (catches 22) is provided for attaching the insert (3).

3. An electric toothbrush according to Claims 1 or 2, characterised in that the linkage has a connecting-rod (20) bearing transverse grooves (15 - 19) in the region of the brush head (2), and that the coupling element is formed in each case by an eccentric (10 - 14) attached to the bristle holder (4 - 8) which after insertion of the insert (3) engages in a transverse groove (15 - 19).

## Revendications

1. Brosse à dents électrique comportant une poignée à manier à la main et un corps (1) de brosse qui présente une tête (2) de brosse avec plusieurs porte-soies (4 - 8) qui tournent séparément et sont reliés, dans la tête (2) de brosse, à un mécanisme qui les entraine, et brosse dans le cas de laquelle un composant présentant les porte-soies (4 - 8) est relié à la brosse à dents avec échange facile pour l'utilisateur, brosseà à dents caractérisée par le fait que le composant est une garniture (3) qui porte les porte-soies (4 - 8) et peut s'insérer dans la tête (2) de brosse et que les porte-soies (4 - 8) présentent chacun un élément de couplage (excentrique 10-14) qui peut se relier au mécanisme (bielle 20) par une liaison enfichable.

2. Brosse à dents électrique selon la revendication 1, caractérisée par le fait que la tête (2) de brosse présente, pour le maintien de la garniture (3), un logement (21) ouvert d'un côté et que pour fixer la garniture (3) est prévue une liaison par crantage (cran 22) détachable à la main.

3. Brosse à dents électrique selon les revendications 1 ou 2, caractérisée par le fait que le mécanisme comporte une bielle (20) qui présente des rainures transversales (15 - 19) dans la zone de la tête (2) de brosse et que l'élément de couplage est formé par un excentrique (10 - 14) rapporté sur chacun des porte-soies (4 - 8) et venant en prise dans une rainure transversale (15 - 19) après insertion de la garniture (3).
